# EUROPÄISCHE PATENTSCHRIFT

(11) **EP 1 205 021 B1**
(45) Veröffentlichungstag und Bekanntmachung des Hinweises auf die Patenterteilung: **12.03.2003**
(21) Anmeldenummer: 00951515.6
(22) Anmeldetag: 16.08.2000
(51) Int. Cl.: H02M 3/335

(54) **VERFAHREN ZUR REGELUNG EINES SCHALTNETZTEILES UND SCHALTNETZTEIL**
METHOD FOR CONTROLLING A SWITCHED-MODE POWER SUPPLY AND A SWITCHED-MODE POWER SUPPLY
PROCEDE DE REGULATION D'UN BLOC D'ALIMENTATION ET BLOC D'ALIMENTATION CORRESPONDANT

(30) Priorität: 19.08.1999 DE 19939389
(43) Veröffentlichungstag der Anmeldung: 15.05.2002
(73) Patentinhaber: Infineon Technologies AG, 81669 München (DE)
(72) Erfinder: PRELLER, Peter, D-81243 München (DE)
(74) Vertreter: Bickel, Michael
(86) Internationale Anmeldenummer: EP0007958
(87) Internationale Veröffentlichungsnummer: WO01015307

(56) Entgegenhaltungen:
- DE-A- 3 602 858
- DE-C- 4 403 731
- US-A- 4 295 188
- US-A- 5 815 569
- P.PRELLER: "Function and application of the TDA 16846 IC for switched mode power supplies." PCIM'99, Juli 1999 (1999-07), Seiten 401-410, XP000978386 Nurnberg, DE
- TDA 16846/TDA 16847 Datenblatt, Controller for Switch Mode Power Supplies Supporting Low Power Standby and Power Factor Correction, 05.07.1999, Infineon technologies

## Beschreibung

Die Erfindung betrifft ein Verfahren zur Regelung eines Schaltnetzteiles mit mindestens einem elektronischen Schalter und mit einer Ansteuerschaltung mit Primärstromnachbildung, wobei bei kleiner werdender Abgabelast die Frequenz zur Verringerung von Schaltverlusten abgesenkt wird.

Die Erfindung betrifft weiter ein Schaltnetzteil mit mindestens einem elektronischen Schalter und mit einer Ansteuerschaltung mit Primärstromnachbildung, wobei bei kleiner werdender Abgabelast die Frequenz zur Verringerung von Schaltverlusten abgesenkt wird.

Bei einem Schaltnetzteil wird eine Gleichspannung mittels eines elektronischen Schalters, zum Beipiels eines Schalttransistors, in eine Rechteckspannung zerhackt, die mittels eines Transformators übersetzt und anschließend gleichgerichtet wird. Mittels einer Regelung, die das Tastverhältnis oder die Frequenz des Schaltvorgangs steuert, wird die Ausgangsspannung auf einen konstanten Wert geregelt. Gegenüber herkömmlichen Netzteilen zeichnen sich Schaltnetzteile durch eine Reihe von Vorteilen aus. Schaltnetzteile sind als Sperrwandler, Durchflusswandler oder Gegentaktwandler ausgeführt.

Um bei einem Schaltnetzteil bei kleiner werdender Abgabelast Schaltverluste zu verringern, wird die Frequenz in Frequenzsprüngen abgesenkt, die jedoch in einigen Einsatzbereichen Störungen verursachen können. So wird beispielsweise bei der Absenkung der Frequenz durch Frequenzsprünge bei Einsatz eines Schaltnetzteiles in einem Fernsehgerät die Bildgeometrie erheblich beeinträchtigt. Derartige Störungen lassen sich durch eine Anpassung der Regelcharakteristik zwar verringern, jedoch ist der Aufwand hierfür beträchtlich.

Es ist daher Aufgabe der Erfindung, ein Verfahren zur Regelung eines Schaltnetzteiles sowie ein Schaltnetzteil mit einfachen Mitteln ohne großen Aufwand so zu gestalten, dass bei Absenkung der Frequenz Störungen bei einem Verbraucher weitgehend vermieden werden.

Diese Aufgabe wird gemäß dem in Anspruch 1 beschriebenen erfindungsgemäßen Verfahren dadurch gelöst, dass der Beginn der Frequenzabsenkung zu niedrigeren Abgabeleistungen verschoben wird.

Diese Aufgabe wird bei einem erfindungsgemäßen Schaltnetzteil gemäß Anspruch 5 dadurch gelöst, dass die Steuerspannung zur Ansteuerung des elektronischen Schalters über ein Netzwerk auf den Eingang der Primärstromnachbildung gekoppelt ist.

Durch die erfindungsgemäße verfahrenstechnische Maßnahme, den Beginn der Frequenzabsenkung zu niedrigeren Abgabeleistungen zu verschieben, treten die Frequenzsprünge nicht mehr in einem Leistungsbereich auf, wo sie stören, sondern können gezielt durch geschickte Wahl des Beginns der Frequenzabsenkung in einen Leistungsbereich verschoben werden, wo sie nicht mehr stören. Schaltungsgemäß wird dieses Verfahren dadurch realisiert, dass die Steuerspannung mittels eines Netzwerkes auf den Eingang der Primärstromnachbildung gekoppelt wird. Dieses Netzwerk kann als Ohm'sches oder als kapazitives Netwerk ausgeführt sein. Das gemäß der Erfindung vorgesehene Netzwerk verformt den Spannungsanstieg am Eingang der Primärstromnachbildung der Auswerteschaltung während der Einschaltzeit des elektronischen Schalters derart, dass über die Regelspannung ein definierbarer Zusammenhang zwischen der Frequenz und der elektrischen Leistung besteht.

Die Erfindung wird nun anhand der in der Zeichnung gezeigten Ausführungsbeispiele eines erfindungsgemäßen Schaltnetzteiles beschrieben und erläutert. In der Zeichnung zeigen
- Figur 1: ein erstes Ausführungsbeispiel,
- Figur 2: ein zweites Ausführungsbeispiel eines erfindungsgemäßen Schaltnetzteiles,
- Figur 3: die Drain-Spannung eines Schalttransistors,
- Figur 4: die Regelspannung und die Spannung am Eingang der Primärstromnachbildung,
- Figur 5: die Regelspannung und die Spannung an einem Eingang der Ansteuerschaltung.
- Figur 6: eine Standardschaltung gemäß dem Stand der Technik,
- Figur 7: ein drittes Ausführungsbeispiels eines erfindungsgemäßen Schaltnetzteiles,
- Figur 8: ein viertes Ausführungsbeispiels eines erfindungsgemäßen Schaltnetzteiles und
- Figur 9: ein fünftes Ausführungsbeispiel eines erfindungsgemäßen Schaltnetzteiles.

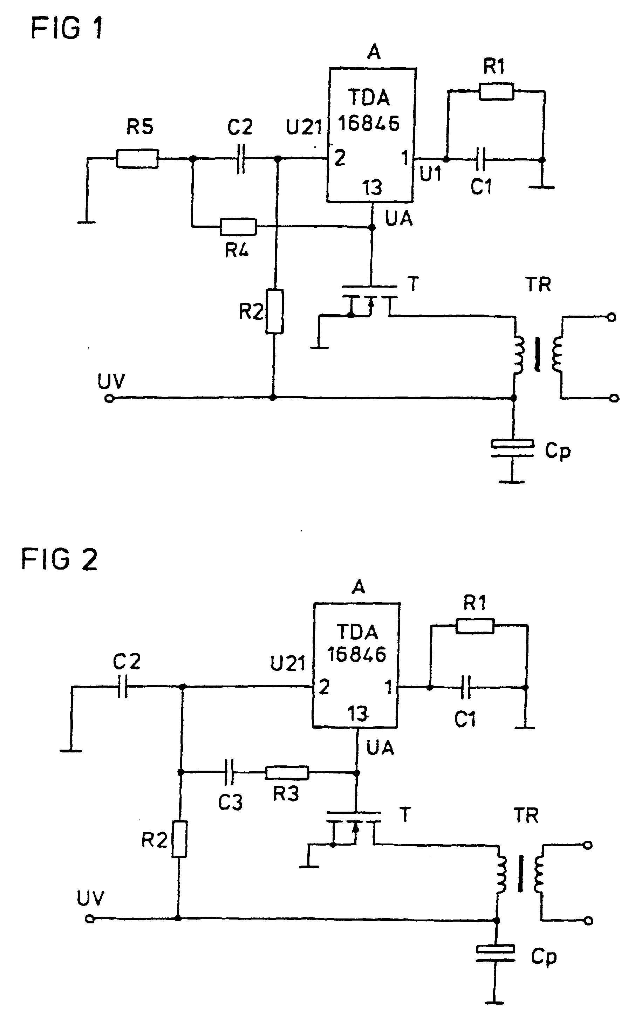

Die Erfindung wird nun anhand des in der Figur 1 abgebildeten ersten Ausführungsbeispieles eines erfindungsgemäßen Schaltnetzteiles beschrieben und erläutert.

Für die Ansteuerschaltung des in Figur 1 gezeigten Schaltnetzteiles ist der Siemens-Baustein TDA 16846 eingesetzt, dessen Pin 1 über eine Parallelschaltung aus einem Widerstand R1 und einer Kapazität C1 auf Bezugspotential geschaltet ist. Der Pin 2 - der Eingang für die Primärstromnachbildung - des Bausteins TDA 16846 ist über eine Kapazität C2 und einen dazu in Reihe geschalteten Widerstand R5 auf Bezugspotential geschaltet. Außerdem liegt eine Versorgungsspannung UV über einen Widerstand R2 am Pin 2. Der Pin 13, des Bausteines TDA 16846, an dem die Steuerspannung abnehmbar ist, ist mit der Gate-Elektrode eines Schalttransistors T und über einen Widerstand R4 mit dem gemeinsamen Verbindungspunkt der Kapazität C2 und des Widerstandes R5 verbunden. Die Source-Elektrode des Schalttransistors T liegt auf Bezugspotential, während die Drain-Elektrode des Schalttransistors T mit dem ersten Anschluss der Primärwicklung eines Transformators TR verbunden ist, an dessen Sekundärwicklung ein Verbraucher anschließbar ist. Der zweite Anschluss der Primärwicklung des Transformators TR liegt unmittelbar an der Versorgungsspannung UV und über eine Kapazität CP, vorzugsweise ein Elektrolytkondensator, auf Bezugspotential.

Durch den Kopplungszweig aus den Widerständen R4 und R5 wird der Spannungsanstieg der Spannung U2 am Pin 2 des Bausteins TDA 16846 während des Einschaltintervalls des Schalttransistors T so verformt, dass über die Regelspannung UR ein definierter Zusammenhang zwischen der Frequenz und der elektrischen Leistung hergestellt wird. Die genaue Funktionsweise wird anhand des zweiten in der Figur 2 gezeigten Ausführungsbeispieles eines erfindungsgemäßen Schaltnetzteiles erläutert.

Für das in der Figur 2 dargestellte zweite Ausführungsbeispiel eines erfindungsgemäßen Schaltnetzteiles ist ebenso wie beim ersten Ausführungsbeispiel für die Ansteuerschaltung der Siemens-Baustein TDA 16846 vorgesehen. Ebenso wie beim ersten Ausführungsbeispiel ist der Pin 1 des Bausteins TDA über eine Parallelschaltung aus einem Widerstand R1 und einer Kapazität C1 an Bezugspotential geschaltet. Pin 13 des Bausteins TDA 16846 ist unmittelbar mit der Gate-Elektrode eines Schalttransistors T verbunden, dessen Source-Elektrode auf Bezugspotential liegt und dessen Drain-Elektrode mit dem ersten Anschluss der Primärwicklung eines Transformators TR verbunden ist. Der Pin 13 des Bausteins TDA 16846 ist über ein RC-Glied, bestehend aus einer Reihenschaltung, aus einem Widerstand R3 und einer Kapazität C3, mit dem Pin 2, dem Eingang für die Primärstromnachbildung, des Bausteins TDA 16846 verbunden. Der Pin 2 ist außerdem über eine Kapazität C2 auf Bezugspotential und über einen Widerstand R2 an die Versorgungsspannung UV geschaltet. Am zweiten Anschluss der Primärwicklung des Transformators TR liegt ebenfalls die Versorgungsspannung UV. Über eine Kapazität CP ist der zweite Anschluss der Primärwicklung des Transformators TR auf Bezugspotential geschaltet. An die Sekundärwicklung des Transformators TR ist der mit Strom zu versorgende Verbraucher anschließbar.

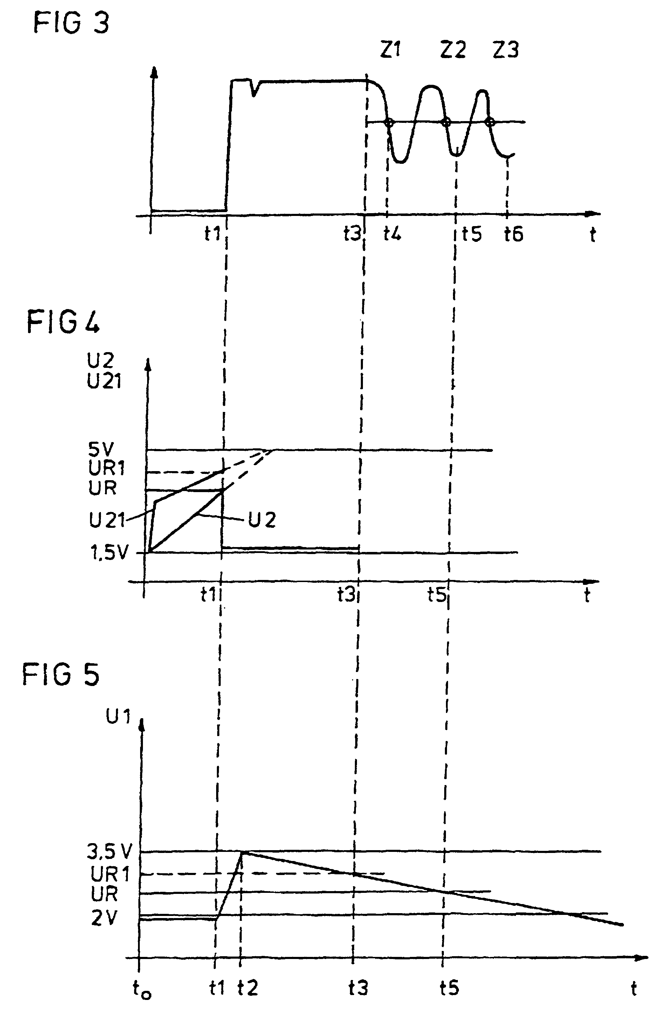

Die in der Figur 1 und 2 gezeigten Ausführungsbeispiele eines erfindungsgemäßen Schaltnetzteiles werden nun mit Hilfe der in den Figuren 3 bis 5 dargestellten Spannungsdiagramme erläutert.

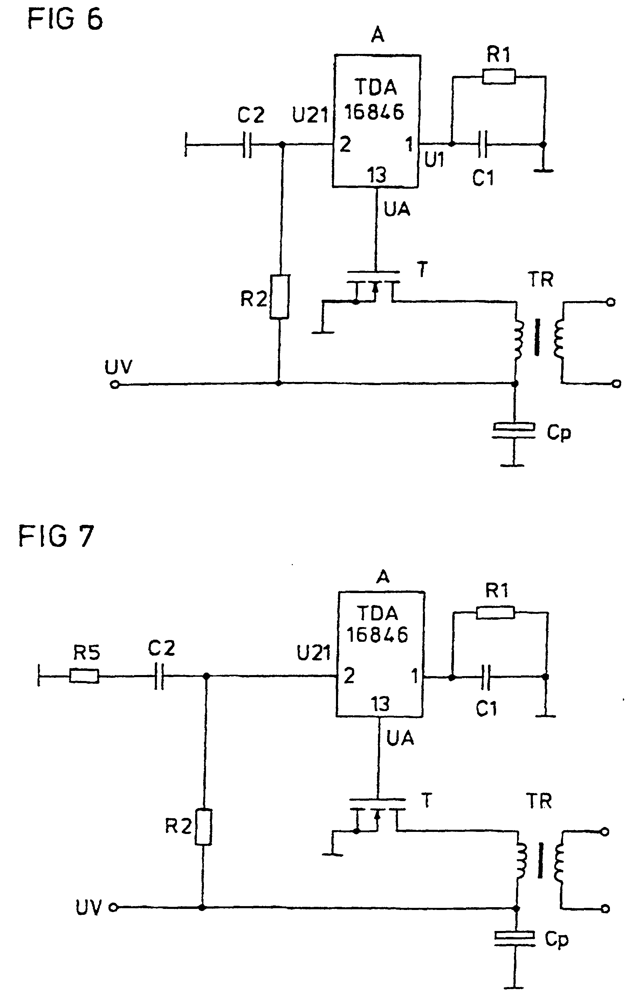

Um die Funktionsweise des in Figur 2 gezeigten Ausführungsbeispieles einfacher erläutern zu können, wird zunächst die Funktion eines Schaltnetzteiles gemäß dem Stand der Technik erklärt, bei dem das RC-Glied aus dem Widerstand R3 und der Kapazität C3 fehlt und das in Figur 6 dargestellt ist. Während des Einschaltintervalls des Schalttransistors T wird die Kapazität C2 über den an die Versorgungsspannung UV bzw. an die eine Elektrode der Kapazität CP angeschlossenen Widerstand R2 geladen. Der Spannungsanstieg U2 an der Kapazität C2 bildet den Anstieg des Primärstromes in der Primärwicklung des Transformators TR nach. Der Anstieg des Primärstromes in der Primärwicklung des Transformators TR und der Anstieg der Spannung U2 am Pin 2 des Bausteines TDA 16846 erfolgen nahezu linear. Durch die Primärstromnachbildung wird der Ausschaltzeitpunkt des Schalttransistors bestimmt, der dann erreicht ist, wenn die Spannung U2 am Pin 2 die Regelspannung UR übersteigt, was zum Zeitpunkt t1 der Fall ist. Abhängig von der Regelspannung UR wird beim Baustein TDA 16846 nicht nur die Einschaltzeit des Schalttransistors T, sondern auch die Zeit vom Ausschalten bis zum nächsten Wiedereinschalten festgelegt. Diese Zeit wird mittels des RC-Gliedes aus dem Widerstand R1 und der Kapazität C1, das an Pin 1 des Bausteines TDA 16846 angeschlossen ist, festgelegt. Während der sogenannten Klingelunterdrückungszeit t1 - t2 wird die Kapazität C1 intern auf einen konstanten Spannungswert, vorzugsweise 3,5 Volt, aufgeladen und anschließend durch den Widerstand R1 entladen. Sobald nun die Spannung U1 am Pin 1 die Regelspannung UR unterschreitet, wird die Freigabe zum Wiedereinschalten des Schalttransistors T beim nächsten Null-Durchgang erteilt. Die Freigabe erfolgt zum Zeitpunkt t5, das Wiedereinschalten dagegen zum Zeitpunkt t6.

In der Figur 3 ist die Drain-Spannung des Schalttransistors T bei einem erfindungsgemäßen Schaltnetzteil mit dem Rückkopplungsnetzwerk dargestellt.

In der Figur 4 ist die Spannung U2 am Pin 2 des Bausteines TDA 16846 bei einem Schaltnetzteil ohne das erfindungsgemäße Koppelnetzwerk sowie die Spannung U21 am Pin 2 bei einem Schaltnetzteil mit dem erfindungsgemäßen Koppelnetzwerk gezeigt.

In der Figur 5 ist die Spannung U1 am Pin 1 des Baustein TDA 16846 gezeigt sowie die Regelspannung UR bei einem Schaltnetzteil ohne das erfindungsgemäße Koppelnetzwerk und die Regelspannung UR1 bei einem Schaltnetzteil mit dem erfindungsgemäßen Koppelnetzwerk.

Bei einem Schaltnetzteil ohne das erfindungsgemäße Koppelnetzwerk steigt die Spannung U2 am Pin 2 des Bausteins TDA 16846 linear bis zum Umkehrpunkt P an, der beispielsweise auf eine Spannung von 5 Volt gesetzt ist. Am Schnittpunkt der Spannung U2 mit der chipinternen Regelspannung UR zum Zeitpunkt t1 wird der Schalttransistor T ausgeschaltet. Wird nun das erfindungsgemäße Koppelnetzwerk, das RC-Glied aus dem Widerstand R3 und der Kapazität C3, in das Schaltnetzteil eingebaut, so hat die Spannung U21 am Pin 2 einen anderen Verlauf. Sie steigt zunächst steiler an als die Spannung U2, macht dann aber einen Knick und schneidet zum selben Zeitpunkt t1 die Regelspannung UR1, die beim erfindungsgemäßen Schaltnetzteil größer ist als bei dem Schaltnetzteil ohne das erfindungsgemäße Koppelnetzwerk. Der auf 5 Volt festgesetzte Umkehrpunkt liegt sowohl beim erfindungsgemäßen Schaltnetzteil als auch beim Schaltnetzteil ohne das erfindungsgemäße Koppelnetzwerk an derselben Stelle.

Aus diesem Grund ist die maximal entnehmbare Leistung aus dem Schaltnetzteil unverändert geblieben. Die identische Lage des Umkehrpunktes wird durch geschickte Dimensionierung des Widerstandes R2 nach Einbau des RC-Gliedes aus der Kapazität C3 und dem Widerstand R3 erzielt. Die Regelung sorgt dafür, dass auch nach dem Einbau des RC-Gliedes bei unveränderter Abgabelast das zwischen den Zeitpunkten t0 und t1 liegende Einschaltintervall den richtigen Wert bekommt. Wegen der Frequenzanhebung wird das Einschaltintervall beim erfindungsgemäßen Schaltnetzteil mit dem RC-Glied etwas kleiner. Die Regelung hebt die Regelspannung vom Wert UR auf den Wert UR1 an. Die Spannung U21 schneidet die Regelspannung UR1 zum selben Zeitpunkt t1 wie die Spannung U2 die Regelspannung UR beim Schaltnetzteil ohne das erfindungsgemäße RC-Glied schneidet. Die etwas höhere Regelspannung UR1 verkürzt beim erfindungsgemäßen Schaltnetzteil die Wartezeit bis zum nächsten Wiedereinschalten des Schalttransistors T, weil der Schnittpunkt der Spannung U1 mit der Regelspannung UR1 am Zeitpunkt t3 und nicht mehr am späteren Zeitpunkt t5 liegt. Aus diesem Grund wird der Schalttransistor T bereits beim ersten Nulldurchgang 21 seiner Drain-Spannung Ud zum Zeitpunkt t4 wieder eingeschaltet. Weil der Schalttransistor T beim ersten Nulldurchgang Z1 bereits wieder eingeschaltet wird, wird der Lastbereich nach unten hin erweitert. Wie weit der Lastbereich nach unten hin erweitert wird, hängt vom Verhältnis der Kapazität C3 zur Kapazität C2 ab. Als vorteilhaft hat es sich erwiesen, den Wert der Kapazität C3 auf etwa 10% des Wertes der Kapazität C2 festzusetzen. Geeignete Werte für die Kapazität C2 sind zum Beispiel 470 pF und für die Kapazität C3 dementsprechend 47 pF. Durch den Serienwiderstand R3 wird der steile Anstieg der Spannung U21 etwas verflacht. Durch den Widerstand R3 wird verhindert, dass die Frequenz bei sehr geringer Last - zum Beispiel im Stand-by-Betrieb - durch das RC-Glied aus der Kapazität C3 und dem Widerstand R3 angehoben wird, weil die Einschaltdauer bei einer höheren Spannung U21 bereits sehr klein wird. Der Widerstand R3 ist daher nur bei größeren Werten der Kapazität C3 notwendig. Bei kleineren Werten der Kapazität C3 kann der Widerstand R3 durch einen Kurzschluss ersetzt werden.

Die Aufteilung des Spannungsverlaufs der Spannung U21 beim erfindungsgemäßen Schaltnetzteil in einen steilen und einen flachen Teil ändert auch in günstiger Weise die Regelsteilheit. Im steilen Teil, das heißt bei kleinen abgegebenen Leistungen, wird die Regelsteilheit abgesenkt, was die Gefahr von Regelschwingungen verhindert. Im flachen Teil der Spannung U21 wird die Regelsteilheit dagegen vergrößert, so dass eine Änderung der Regelspannung zu einer größeren Änderung des Einschaltintervalls des Schalttransistors T führt. Beim Baustein TDA 16846 wirkt sich dies günstig auf die in diesem Baustein eingebaute Antijitterschaltung aus, weil sich eine Veränderung der Periodendauer durch Auslassen von Nulldurchgängen weniger stark auf die Regelspannung auswirkt. Deshalb läßt sich die Änderung der Regelspannung leichter kompensieren.

Weitere Ausführungsbeispiele der Erfindung sind in den Figuren 7, 8 und 9 dargestellt, die ohne das Koppelnetzwerk auskommen.

Es wird nun das in der Figur 7 gezeigte dritte Ausführungsbeispiel der Erfindung beschrieben und erläutert.

Wie bei den vorhergehenden Ausführungsbeispielen ist der Pin 1 des Siemens-Bausteins TDA 16846 über eine Parallelschaltung aus einem Widerstand R1 und einer Kapazität C1 auf Bezugspotential geschaltet. Eine Versorgungsspannung UV liegt über einen Widerstand R2 am Pin 2. Der Pin 13, an dem die Steuerspannung abnehmbar ist, ist mit der Gate-Elektrode eines Schalttransistors T verbunden, dessen Source-Elektrode auf Bezugspotential liegt, während dessen Drain-Elektrode mit dem ersten Anschluss der Primärwicklung des Transformators TR verbunden ist, an dessen Sekundärwicklung ein Verbraucher anschliessbar ist. Der zweite Anschluss der Primärwicklung des Transformators TR liegt unmittelbar an der Versorgungsspannung UV und über eine Kapazität CP, vorzugsweise ein Elektrolykondensator. auf Bezugspotential.

Der Pin 2 des Siemens-Bausteins TDA 16846 ist über eine Kapazität C2 und einen in Reihe dazu geschalteten Widerstand R5 auf Bezugspotential geschaltet.

Das dritte Ausführungsbeispiel eines erfindungsgemäßen Schaltnetzteiles stellt eine vereinfachte Variante des in Figur 1 abgebildeten ersten Ausführungsbeispiels dar, in welchem der Koppelwiderstand R4 zwischen Pin 13 und dem Verbindungspunkt zwischen dem Widerstand R5 und der Kapazität C2 weggelassen ist. Die Verformung des Spannungsanstiegs am Pin 2 geschieht allein durch den Widerstand R5. Der Spannungssprung der Spannung am Pin 2 wird durch den Spannungsabfall im Widerstand R5 hervorgerufen, den der Aufladestrom durch den Widerstand R2, der auch durch die Kapazität C2 und durch den Widerstand R5 fließt, zu Beginn der Einschaltzeit des Schalttransistors T erzeugt. Weil beim dritten Ausführungsbeispiel eines erfindungsgemäßen Schaltnetzteiles die Höhe des Spannungssprungs zur Versorgungsspannung UV proportional ist, entsteht der Effekt einer "Umkehrpunktnachführung", das heißt bei höherer Versorgungsspannung UV wird die 5-V-Grenze an Pin 2 wegen des höheren Spannungssprungs früher erreicht. Damit kann eine annähernde Unabhängigkeit der maximal möglichen Ausgangsleistung von der Versorgungsspannung UV bei freischwingenden Schaltnetzteilen erzielt werden.

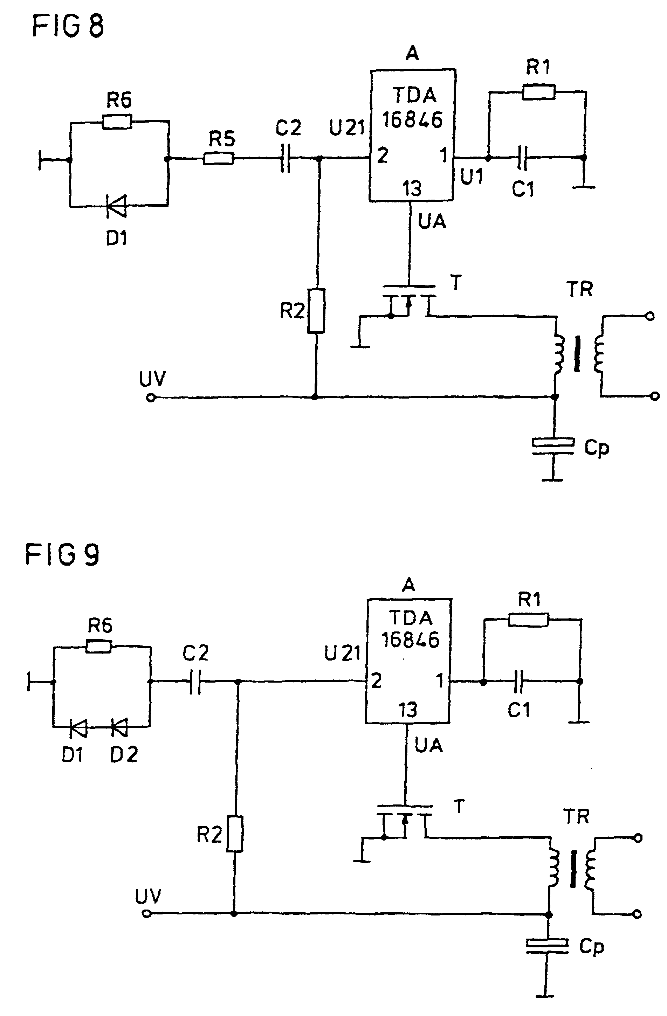

Es wird nun das in Figur 8 gezeigte vierte Ausführungsbeispiel eines erfindungsgemäßen Schaltnetzteiles beschrieben und erläutert.

Es unterscheidet sich vom dritten in der Figur 7 gezeigten Ausführungsbeispieles dadurch, dass der Widerstand R5 nicht unmittelbar, sondern über eine Parallelschaltung aus einem Widerstand R6 und einer Diode D1 auf Bezugspotential geschaltet ist.

Durch die Parallelschaltung aus dem Widerstand R6 und der Diode D1 wird der Spannungssprung der Spannung an Pin 2 insbesondere bei einem Weitbereichsnetzteil weiter erhöht, um den Beginn der Frequenzabsenkung bei abnehmender Ausgangslast weiter hinauszuschieben. Eine Vergrößerung des Widerstandes R5 allein würde nämlich eine zu starke Umkehrpunktnachführung bewirken. Deshalb ist in Serie zum Widerstand R5 noch eine Diode D1 geschaltet, die einen stromunabhängigen Spannungsabfall, und zwar den einer Diodenflussspannung, erzeugt. Der Widerstand R5 ist vorzugsweise so dimensioniert, dass der Umkehrpunktnachführung in gewünschtem Maß hervorgerufen wird. Der Widerstand R6, der parallel zur Diode D1 geschaltet ist, ermöglicht den zur Umladung der Kapazität C2 erforderlichen Rückstrom nach dem Ende der Einschaltzeit.

Es wird nun das in Figur 9 abgebildete fünfte Ausführungsbeispiel eines erfindungsgemäßen Schaltnetzteiles beschrieben und erläutert.

Bei dem in der Figur 9 gezeigten fünften Ausführungsbeispiel ist zur Diode D1 eine weitere Diode D2 in Reihe geschaltet. Durch die Serienschaltung der beiden Dioden D1 und D2 wird ein relativ hoher Spannungssprung der Spannung an Pin 2 erzielt. Der Beginn der Frequenzabsenkung kann dann zu sehr kleinen Leistungen hin verschoben oder sogar ganz aufgehoben werden. Auf den Widerstand R5, der in der Figur 8 zur Umkehrpunktnachführung nachgebaut ist, kann hier verzichtet werden, weil die geringe Stromabhängigkeit des Spannungsabfalles an der Serienschaltung der beiden Dioden D1 und D2 bereits den gewünschten Effekt der Umkehrpunktnachführung bewirkt.

Die Erfindung bietet dem Entwickler und Anwender den großen Vorteil, das Frequenzverhalten des erfindungsgemäßen Schaltnetzteiles in einem verhältnismäßig großen Bereich wählen zu können und so optimal an die vom Schaltnetzteil zu versorgende Last anpassen zu können. Neben dem bereits erwähnten Siemens-Baustein TDA 16846 sind auch die Siemens-Bausteine TDA 16847, TDA 16848, TDA 16849, TDA 4605-2 und TDA 4605-3 als Ansteuerschaltung für das erfindungsgemäße Schaltnetzteil geeignet. Jedoch ist die Erfindung nicht auf die angeführten Bausteine von Siemens beschränkt, denn die erfindungsgemäße Maßnahme, die Steuerspannung über ein Netzwerk auf den Eingang der Primärstromnachbildung zu koppeln, läßt sich bei allen Ansteuerbausteinen mit einer Primärstromnachbildung realisieren.

Besonders vorteilhaft läßt sich die Erfindung in Fernsehgeräten einsetzen, weil sie die Bildgeometrie nicht verfälscht.

Dieser Vorteil wird mit einfachen und sehr preisgünstigen Mitteln erzielt, denn die Ansteuerschaltung ist verglichen mit dem Stand der Technik nur noch mit einem Koppelnetzwerk aus zwei Widerständen oder aus einem RC-Glied zu ergänzen.

## Patentansprüche

1. Verfahren zur Regelung eines Schaltnetzteiles mit mindestens einem elektronischen Schalter (T) und mit einer Ansteuerschaltung (A) mit Primärstromnachbildung, wobei bei kleiner werdender Abgabelast die Frequenz zur Verringerung von Schaltverlusten abgesenkt wird,
**dadurch gekennzeichnet, dass** der Beginn der Frequenzabsenkung zu niedrigeren Abgabeleistungen hin verschoben wird, indem der Anstieg einer Spannung (U21) an einem Eingang (2) für die Primärstromnachbildung der Ansteuerschaltung (A) während des Einschaltintervalls des elektronischen Schalters (T) derart verformt wird dass sie während eines Zeitabschnitts steiler ansteigt.

2. Verfahren nach Anspruch 1,
**dadurch gekennzeichnet, dass** der Spannungsanstieg (U21) am Eingang (2) der Primärstromnachbildung mittels eines Ohm schen Koppelnetzwerkes (R4, R5) erzeugt wird.

3. Verfahren nach Anspruch 1,
**dadurch gekennzeichnet, dass** der Spannungsanstieg (U21) am Eingang (2) der Primärstromnachbildung mittels eines kapazitiven Koppelnetzwerkes (R3, C3) erzeugt wird.

4. Schaltnetzteil mit mindestens einem elektronischen Schalter (T) und mit einer Ansteuerschaltung (A) mit Primärstromnachbildung, wobei bei kleiner werdender Abgabelast die Frequenz zur Verringerung von Schaltverlusten verringert wird,
**dadurch gekennzeichnet, dass** die SteuerSpannung (UA) für den elektrischen Schalter T über ein Koppelnetzwerk (R4, R5; R3, C3) auf den Eingang (2) der Primärstromnachbildung der Ansteuerschaltung (A) gekoppelt ist, wobei das Koppelnetzwerk (R4, R5; R3, C3) dazu ausgebildet ist, einen Anstieg einer Spannung (U21) an einem Eingang (2) für die Primärstromnachbildung der Ansteuerschaltung (A) während des Einschaltintervalls des elektronischen Schalters (T) derart zu verformen dass die Spannung während eines Zeitabschnitts steiler ansteigt.

5. Schalthetzteil nach Anspruch 4,
**dadurch gekennzeichnet, dass** das Koppelnetzwerk als Ohm'sches Widerstandsnetzwerk (R4, R5) ausgeführt ist.

6. Schaltnetzteil nach Anspruch 4,
**dadurch gekennzeichnet, dass** das Koppelnetzwerk als kapazitives Netzwerk (R3, C3) ausgeführt ist.

7. Schalthetzteil nach Anspruch 5,
**dadurch gekennzeichnet, dass** das Ohm'sche Koppelnetzwerk ein Spannungsteiler aus 2 Widerständen (R4, R5) ist.

8. Schaltnetzteil nach Anspruch 6,
**dadurch gekennzeichnet, dass** das kapazitive Koppelnetzwerk ein RC-Glied aus einem Widerstand (R3) und einer dazu in Reihe geschalteten Kapazität (C3) ist.

9. Schaltnetzteil nach Anspruch 7,
**dadurch gekennzeichnet,dass** für die Ansteuerschaltung (A) der Siemens-Baustein TDA 16846 oder TDA 16847 vorgesehen ist, dessen Pin 1 über eine Parallelschaltung aus einem ersten Widerstand (R1) und einer ersten Kapazität (C1) auf Bezugspotential liegt, dessen Pin 2 - der Eingang der Primärstromnachbildung - über eine Reihenschaltung aus einer zweiten Kapazität (C2) und einem zweiten Widerstand (R5) auf Bezugspotential liegt und dessen Pin 13 mit der Gate-Elektrode eines Schalttransistors (T) und über einen dritten widerstand (R4) mit dem gemeinsamen Verbindungspunkt der zweiten Rapazität (C2) und des zweiten Widerstandes (R5) verbunden ist, dass die Source-Elektrode des Schalttransistors (T) auf Bezugspotential liegt, dass die Drain-Elektrode des Schalttransistors (T) mit dem ersten Anschluss der Primärwicklung eines Transformators (TR) verbunden ist, an deren zweitem Anschluss eine Versorgungsspannung (UV) liegt und deren zweiter Anschluss über eine dritte Kapazität (Cp) auf Bezugspotential geschaltet ist, dass der Pin 2 des Bausteins (A) über einen vierten Widerstand (R2) an der Versorgungsspannung (UV) liegt und dass an der Sekundärwicklung des Transformators (TR) der mit Strom zu versorgende Verbraucher anschließbar ist.

10. Schaltnetzteil nach Anspruch 7,
**dadurch gekennzeichnet, dass** für die Ansteuerschaltung (A) der Siemens-Baustein TDA 16846 oder TDA 16847 vorgesehen ist, dessen Pin 1 über eine Parllelschaltung aus einem ersten Widerstand (R1) und einer ersten Kapazität (C1) auf Bezugspotential liegt, dessen Pin 2 - der Eingang der Primärstromnachbildung - über eine zweite Kapazität C2 auf Bezugspotential liegt und dessen Pin 13 mit der Gate-Elektrode eines Schalttransistors (T) und über ein RC-Glied aus einem dritten Widerstand (R3) und einer dazu in Reihe geschalteten dritten Kapazität (C3) auf den Pin 2 der Ansteuerschaltung (A) rückgekoppelt ist, dass die Source-Elektrode des Schalttransistors (T) auf Bezugspotential liegt, dass die Drain-Elektrode des Schalttransistors (T) mit dem ersten Anschluss der Primärwicklung eines Transformators (TR) verbunden ist, an deren zweiten Anschluss eine Versorgungsspannung (UV) liegt und deren zweiter Anschluss über eine vierte Kapazität (Cp) auf Bezugspotential geschaltet ist, dass der Pin 2 des Bausteins (A) über einen dritten Widerstand (R2) an der Versorgungsspannung (UV) liegt und dass an der Sekundärwicklung des Transformators (TR) ein mit Strom zu versorgender Verbraucher anschließbar ist.

11. Schaltnetzteil mit mindestens einem elektronischen Schalter (T) und mit einer Ansteuerschaltung (A) mit Primärstromnachbildung, wobei bei kleiner werdender Abgabe last die Frequenz zur Verringerung von Schaltverlusten Verringert wird, und
zwischen einen Eingang (2) der Ansteuerschaltung (A) für die Primärstromnachbildung, Bezugspotential (GND) und eine Versorgungsspannung (UV)
ein Netzwerk (R2, C2, R5, R2, C2, R5, R6, D1; R2, C2, R6, D1, D2) geschaltet ist, **dadurch gekennzeichnet dass** das Netzwerk dazu ausgebildet ist, einen Anstieg einer Spannung (U21) an dem Eingang (2) für die Primärstromnachbildung der Ansteuerschaltung (A) während des Einschaltintervalls des elektronischen Schalters (T) derart zu verformen dass die Spannung (U21) während eines Zeitabschnitts steiler ansteigt.

12. Schaltnetzteil nach Anspruch 11,
**dadurch gekennzeichnet, dass**
das Metzwerk eine Reihenschaltung aus einem Widerstand (R5) und einer Kapazität (C2), über welche der Eingang (2) für die Primärstromnachbildung an Bezugspotential liegt, und einen weiteren Widerstand (R2), über welchen der Eingang (2) für die Primärstromnachbildung an einer Versorgungsspannung (UV) liegt, aufweist.

13. Schaltnetzteil nach Anspruch 11,
**dadurch gekennzeichnet, dass**
das Netzwerk eine Reihenschaltung aus einem Widerstand (R5), einer Kapazität (C2) und einer Parallelschaltung mit einem weiteren widerstand (R6) und einer Diode (D1), über welche der Eingang (2) für die Primärstromnachbildung an Bezugspotential liegt, und einen weiteren Widerstand (R2), über welchen der Eingang (2) für die Primärstromnachbildung an einer Versorgungsspannung (UV) liegt, aufweist.

14. Schaltnetzteil nach Anspruch 11,
**dadurch gekennzeichnet, dass**
das Netzwerk eine Reihenschaltung aus einer Kapazität (C2) und einer Parallelschaltung mit einem Widerstand (R6) und einer Reihenschaltung zweier Dioden (D1, D2), und einen weiteren Widerstand (R2), über welchen der Eingang (2) für die Primärstromnachbildung an einer Versorgungsspannung (UV) liegt, aufweist.

15. Schaltnetzteil nach einem der Ansprüche 11 bis 14,
**dadurch gekennzeichnet, dass** für die Ansteuerschaltung (A) der Siemens-Baustein TDA 16846 oder TDA 16847 vorgesehen ist, dessen Pin 1 über eine Parallelschaltung aus einem ersten Widerstand (R1) und einer ersten Kapazität (C1) auf Bezugspotential liegt, dessen Pin 2 den Eingang der Primärstromnachbildung bildet und dessen Pin 13 mit der Gate-Elektrode eines Schalttransistors (T) und über ein RC-Glied aus einem dritten Widerstand (R3) und einer dazu in Reihe geschalteten dritten Kapazität (C3) auf den Pin 2 der Ansteuerschaltung (A) rückgekoppelt ist, dass die Source-Elektrode des Schalttransistors (T) auf Bezugspotential liegt, dass die Drain-Elektrode des Schalttransistors (T) mit dem ersten Anschluss der Primärwicklung eines Transformators (TR) verbunden ist, an deren zweiten Anschluss eine Versorgungsspannung (UV) liegt und deren zweiter Anschluss über eine vierte Kapazität (Cp) auf Bezugspotential geschaltet ist.

16. verfahren oder Schaltungsanordnung nach einem der vorangehenden Ansprüche,
**dadurch gekennzeichnet, dass** als elektronischer Schalter ein Schalttransistor (T) vorgesehen ist.

## Claims

1. A method for the closed loop control of a switched-mode power supply having at least one electronic switch (T) and having a control circuit (A) with primary power simulation network, whereby the frequency for reducing switching losses is reduced as the delivery load becomes smaller,
**characterised in that** the start of the frequency reduction is shifted towards lower delivery powers by the rise in a voltage (U21) at an input (2) for the primary power simulation network of the control circuit (A) being deformed during the switch-on interval of the electronic switch (T) in such a manner that it rises more steeply during a time slot.

2. A method according to Claim 1,
**characterised in that** the voltage increase (U21) at the input (2) of the primary power simulation network is produced by means of an Ohmic switching network (R4, R5).

3. A method according to Claim 1,
**characterised in that** the voltage increase (U21) at the input (2) of the primary power simulation network is produced by means of a capacitive switching network (R3, C3).

4. A switched-mode power supply having at least one electronic switch (T) and having a control circuit (A) with primary power simulation network, wherein the frequency for reducing switching losses is reduced as the delivery load becomes smaller,
**characterised in that** the control voltage (UA) for the electrode switch T is coupled via a switching network (R4, R5; R3, C3) to the input (2) of the primary power simulation network of the control circuit (A), where the switching network (R4, R5; R3, C3) is constructed to deform a rise in a voltage (U21) at an input (2) for the primary power simulation network of the control circuit (A) during the switch-on interval of the electronic switch (5) in such a manner that the voltage rises more steeply during a time slot.

5. A switched-mode power supply according to Claim 4,
**characterised in that** the switching network is designed as an Ohmic resistance network (R4, R5).

6. A switched-mode power supply according to Claim 4,
**characterised in that** the switching network is designed as a capacitive network (R3, C3).

7. A switched-mode power supply according to Claim 5,
**characterised in that** the Ohmic switching network is a voltage divider consisting of 2 resistors (R4, R5).

8. A switched-mode power supply according to Claim 6,
**characterised in that** the capacitive switching network is an RC element consisting of a resistor (R3) and a capacitor (C3) connected in series therewith.

9. A switched-mode power supply according to Claim 7,
**characterised in that** for the control circuit (A) the Siemens module TDA 16846 or TDA 16847 is provided, in which pin 1 lies at reference potential via a parallel circuit consisting of a first resistor (R1) and a first capacitor (C1), in which pin 2 - the input of the primary power simulation network - lies at reference potential via a series circuit consisting of a second capacitor (C2) and a second resistor (R5) and in which pin 13 is connected t the gate electrode of a switching transistor (T) and via a third resistor (R4) to the common connection point of the second capacitor (C2) and of the second resistor (R5),
**in that** the source electrode of the switching transistor (T) lies at reference potential,
**in that** the drain electrode of the switching transistor (T) is connected to a first connection of the primary winding of a transformer (TR), at the second connection of which there is a supply voltage (UV) and the second connection of which is switched via a third capacitor (Cp) to reference potential,
**in that** pin 2 of the module (A) lies at the supply voltage (UV) via a fourth resistor (R.)
**and in that** the consumer to be supplied with power can be connected to the secondary winding of the transformer (TR).

10. A switched-mode power supply according to Claim 7,
**characterised in that** for the control circuit (A) the Siemens module TDA 16846 or TDA 18847 is provided, in whch pin 1 lies at reference potential via a parallel circuit consisting of a first resistor (R1) and a first capacitor (C1), in which pin 2 - the input of the primary power simulation network - lies at reference potential via a second capacitor C2 and in which pin 13 with the gate electrode of a switching transistor (T) and via an RC element consisting of a third resistor (R3) and a third capacitor (C3) connected in series therewith is fed back to the pin 2 of the control circuit (A),
**in that** the source electrode of the switching transistor (T) lies at reference potential,
**in that** the drain electrode of the switching transistor (T) is connected to the first connection of the primary winding of a transformer (TR), at the second connection of which there is a supply voltage (UV) and the second connection of which is connected via a fourth capacitor (Cp) to reference potential,
**in that** pin 2 of the module (A) lies at the supply voltage (UV) via a third resistor (R2) **and in that** a consumer to be supplied with power can be connected to the secondary winding of the transformer (TR).

11. A switched mode power supply having at least one electronic switch (T) and having a control circuit (A) with primary power simulation network, where the frequency for reducing switching losses is reduced as the delivery load becomes smaller, and a network (R2, C2, R5, R2, C2, R5, R6, D1; R2, C2, R6, D1, D2) is connected between an input (2) of the control circuit (A) for the primary power simulation network, reference potential (GND) and a supply voltage (UV),
**characterised in that** the network is constructed to deform an increase in a voltage (U21) at the input (2) for the primary power simulation network of the control circuit (A) during the switch-on interval of the electronic switch (T) in such a manner that the voltage (U21) increases more steeply during a time slot.

12. A switched mode power supply according to Claim 11,
**characterised in that** the network comprises a series circuit consisting of a resistor (R5) and a capacitor (C2), via which the input (2) for the primary power simulation network lies at reference potential, and a further resistor (R2), via which the input (2) for the primary power simulation network lies at a supply voltage (UV).

13. A switched-mode power supply according to Claim 11,
**characterised in that** the network comprises a series circuit consisting of a resistor (R5), a capacitor (C2) and a parallel circuit having a further resistor (R6) and a diode (D1), via which the input (2) for the primary power simulation network lies at reference potential, and a further resistor (R2), via which the input (2) for the primary power simulation network lies at a supply voltage (UV).

14. A switched mode power supply according to Claim 11,
**characterised in that** the network comprises a series circuit consisting of a capacitor (C2) and a parallel circuit having a resistor (R6) and a series circuit of two diodes (D1, D2), and a further resistor (R2), via which the input (2) for the primary power simulation network lies at a supply voltage (UV).

15. A switched-mode power supply according to one of Claims 11 to 14,
**characterised in that** for the control circuit (A) the Siemens module TDA 16846 or TDA 16847 is provided, in which pin 1 lies at reference potential via a parallel circuit consisting of a first resistor (R1) and a first capacitor (C1), in which pin 2 forms the input of the primary power simulation network and in which pin 13 with the gate electrode of a switching transistor (T) and via an RC element consisting of a third resistor (R3) and a third capacitor (C3) connected in series therewith is fed back to the pin 2 of the control circuit (A),
**in that** the source electrode of the switching transistor (T) lies at reference potential,
**in that** the drain electrode of the switching transistor (T) is connected to the first connection of the primary winding of a transformer (TR), at the second connection of which there is a supply voltage (UV) and the second connection of which is switched to reference potential via a fourth capacitor (Cp).

16. A method or circuitry according to one of the preceding Claims,
**characterised in that** a switching transistor (T) is provided as an electronic switch.

## Revendications

1. Procédé de régulation d'un bloc d'alimentation comportant au moins un commutateur électronique (T) et un circuit de commande (A) avec copie du courant primaire, selon lequel on abaisse la fréquence pour diminuer les pertes de commutation lorsque la charge à fournir diminue,
**caractérisé en ce qu'**
on décale le début de l'abaissement de fréquence vers les puissances émises plus faibles en déformant la montée d'une tension (U21) à une entrée (2) pour copier le courant primaire du circuit de commande (A) pendant l'intervalle de conduction du commutateur électronique (T), de façon à ce qu'elle monte plus rapidement pendant un intervalle de temps.

2. Procédé selon la revendication 1,
**caractérisé en ce que**
la montée de tension (U21) à l'entrée (2) du circuit de copie du courant primaire est générée par un réseau de couplage ohmique (R4, R5).

3. Procédé selon la revendication 1,
**caractérisé en ce qu'**
on génère la montée de tension (U21) à l'entrée (2) du circuit de copie primaire à l'aide d'un réseau de couplage capacitif (R3, C3).

4. Bloc d'alimentation comportant au moins un commutateur électronique (T) et un circuit de commande (A) avec un circuit de copie de courant primaire, selon lequel lorsque la charge à fournir diminue, la fréquence est diminuée pour réduire les pertes de commutation,
**caractérisé en ce que**
la tension de commande (UA) pour le commutateur électrique (T) est couplée par un réseau de couplage (R4, R5; R3, C3) à l'entrée (2) du circuit de copie de courant primaire du circuit de commande (A), le réseau de couplage (R4, R5; R3, C3) étant réalisé pour que l'augmentation d'une tension (U21) à une entrée (2) du circuit de copie de courant primaire du circuit de commande (A), pendant l'intervalle de conduction du commutateur électronique (T), soit déformée de sorte que la tension augmente plus fortement pendant un intervalle de temps.

5. Bloc d'alimentation selon la revendication 4,
**caractérisé en ce que**
le réseau de couplage est un réseau de résistance ohmique (R4, R5).

6. Bloc d'alimentation selon la revendication 4,
**caractérisé en ce que**
le réseau de couplage est un réseau capacitif (R3, C3).

7. Bloc d'alimentation selon la revendication 5,
**caractérisé en ce que**
le réseau de couplage ohmique est un diviseur de tension formé de deux résistances (R4, R5).

8. Bloc d'alimentation selon la revendication 6,
**caractérisé en ce que**
le réseau de couplage capacitif est un réseau RC formé d'une résistance (R3) et d'une capacité (C3) branchées en série.

9. Bloc d'alimentation selon la revendication 7,
**caractérisé en ce que**
le circuit de commande (A) est le composant Siemens TDA 16846 ou TDA 16847 dont la broche 1 est reliée au potentiel de référence par l'intermédiaire d'un montage en parallèle formé d'une première résistance (R1) et d'une première capacité (C1), dont la broche numéro 2 (l'entrée du circuit de copie du courant primaire) est reliée par un montage en série formé d'une seconde capacité (C2) et d'une seconde résistance (R5) à un potentiel de référence, et dont la broche 13 est reliée à l'électrode de porte d'un transistor de commutation (T) et par une troisième résistance (R4) au point de liaison commun de la seconde capacité (C2) et de la seconde résistance (R5),
l'électrode de source du transistor de commutation (T) étant mise au potentiel de référence,
l'électrode de drain du transistor de commutation (T) étant reliée à la première borne de l'enroulement primaire d'un transformateur (TR) dont la seconde borne reçoit une tension d'alimentation (UV), cette seconde borne étant reliée par une troisième capacité (Cp) à un potentiel de référence, et
la broche 2 du composant (A) est reliée par une quatrième résistance (R2) à la tension d'alimentation (UV), et un consommateur destiné à être alimenté en courant est relié à l'enroulement secondaire du transformateur (TR).

10. Bloc d'alimentation selon la revendication 7,
**caractérisé en ce que**
le circuit de commande (A) est le composant Siemens TDA 16846 ou TDA 16847 dont la broche 1 est reliée par un montage en parallèle formé d'une première résistance (R1) et d'une première capacité (C1) au potentiel de référence, dont la broche 2 (l'entrée du circuit de copie du courant primaire) est reliée par une seconde capacité (C2) au potentiel de référence et dont la broche 13 est reliée à l'électrode de porte d'un transistor de commutation (T), et à la broche 2 du circuit de commande (A) par couplage en retour, par un élément (RC) formé d'une troisième résistance (R3) et d'une troisième capacité (C3) branchée en série,
l'électrode de source du transistor de commutation (T) étant au potentiel de référence,
l'électrode de drain du transistor de commutation (T) étant reliée à la première borne du primaire d'un transformateur (TR) dont la seconde borne reçoit une tension d'alimentation (UV), cette seconde borne étant reliée par une quatrième capacité (Cp) au potentiel de référence, la broche 2 du composant (A) étant reliée par une troisième résistance (R2) à la tension d'alimentation (UV) et l'enroulement secondaire du transformateur (TR) étant relié à un consommateur destiné à être alimenté en courant.

11. Bloc d'alimentation comportant au moins un commutateur électronique (T) et un circuit de commande (A) avec un circuit de copie de courant primaire, dans lequel lorsque la charge à fournir diminue, la fréquence est diminuée pour réduire les pertes de commutation, et entre une entrée (2) du circuit de commande (A) pour le circuit de copie du courant primaire, le potentiel de référence (GND) et une tension d'alimentation (UV), on a un réseau (R2, C2, R5; R2, C2, R5, R6, D1; R2, C2, R6, D1, D2),
**caractérisé en ce que**
le réseau est conçu pour que la montée d'une tension (U21) à l'entrée (2) du circuit de copie de courant primaire du circuit de commande (A), pendant l'intervalle de branchement du commutateur électronique (T) est déformée pour que la tension (U21) augmente plus fortement pendant un intervalle de temps.

12. Bloc d'alimentation selon la revendication 11,
**caractérisé en ce que**
le réseau comporte un montage en série formé d'une résistance (R5) et d'une capacité (C2) par lequel l'entrée (2) du circuit de copie de courant primaire est reliée au potentiel de référence, et une autre résistance (R2) par laquelle l'entrée (2) du circuit de copie du courant primaire est reliée à une tension d'alimentation (UV).

13. Bloc d'alimentation selon la revendication 11,
**caractérisé en ce que**
le réseau comporte un montage en série formé d'une résistance (R5) et d'une capacité (C2) et un montage en parallèle comportant une autre résistance (R6) et une diode (D1) par lesquelles l'entrée (2) du circuit de copie du courant primaire est reliée au potentiel de référence, ainsi qu'une autre résistance (R2) par laquelle l'entrée (2) de copie du courant primaire est reliée à une tension d'alimentation (UV).

14. Bloc d'alimentation selon la revendication 11,
**caractérisé en ce que**
le réseau comprend un montage en série formé d'une capacité (C2) et d'un montage en parallèle entre une résistance (R6) et un montage en série de deux diodes (D1, D2) ainsi qu'une autre résistance (R2), réseau par lequel l'entrée (2) du circuit de copie du courant primaire est reliée à une tension d'alimentation (UV).

15. Bloc d'alimentation selon l'une quelconque des revendications 11 à 14,
**caractérisé en ce que**
le circuit de commande (A) est formé par le composant Siemens TDA 16846 ou TDA 16847 dont la broche 1 est reliée par un montage en parallèle formé d'une première résistance (R1) et d'une première capacité (C1) au potentiel de référence, dont la broche 2 forme l'entrée du circuit de copie du courant primaire et dont la broche 13 est reliée à l'électrode de porte d'un transistor de commutation (T), et sur la broche 2 du circuit de commande (A) suivant un couplage en retour, par un élément RC formé d'une troisième résistance (R3) et d'une troisième capacité (C3) branchée en série,
l'électrode de source du transistor de commutation (T) étant au potentiel de référence,
l'électrode de drain du transistor de commutation (T) est reliée à la première borne de l'enroulement primaire d'un transformateur (TR) dont la seconde borne reçoit une tension d'alimentation (UV), cette seconde borne étant reliée au potentiel de référence par l'intermédiaire d'une quatrième capacité (Cp).

16. Procédé ou montage selon l'une quelconque des revendications précédentes,
**caractérisé en ce que**
le commutateur électronique est un transistor de commutation (T).
